# DEMANDE DE BREVET EUROPEEN

(11) **EP 0 932 112 A1**
(43) Date de publication de la demande: **28.07.1999**
(21) Numéro de dépôt: 99200109.9
(22) Date de dépôt: 15.01.1999
(51) Int. Cl.: G06K 7/00

(54) **Lecteur de carte à puce muni d'un commutateur d'horloge**

(30) Priorité: 20.01.1998 FR 9800563
(71) Demandeur: Koninklijke Philips Electronics N.V., 5621 BA Eindhoven (NL)
(72) Inventeur: Digabel, Patrick, 75008 Paris (FR)
(74) Mandataire: Caron, Jean

(57) **Abrégé**

La présente invention concerne un lecteur de carte à puce, comprenant :
. un connecteur (CON) dont une borne est destinée à délivrer un signal d'horloge (CLK) au circuit intégré présent sur la carte,
. un micro-contrôleur (MC) destiné à échanger des données avec le circuit intégré,
. un module d'interface (IM), comportant un premier oscillateur (OSC1) générant un premier signal d'horloge (Clk1), et
. un deuxième oscillateur (OSC2) générant un deuxième signal d'horloge (Clk2), le module d'interface (IM) comportant en outre un dispositif d'aiguillage (SW), commandé par le micro-contrôleur (MC), qui achemine vers la borne d'horloge du connecteur (CON) l'un ou l'autre des premier et deuxième signaux d'horloge (Clk1 ou Clk2).

Selon l'invention, le dispositif d'aiguillage (SW) comporte un détecteur de phase (PD) qui assujettit toute commutation du dispositif d'aiguillage (SW) à une simultanéité des fronts actifs des premier et deuxième signaux d'horloge (Clk1 et Clk2).

Applications : Téléphones portables, décodeurs TV.

## Description

La présente invention concerne un lecteur de carte à puce, comprenant :
. un connecteur destiné à être relié électriquement à un circuit intégré présent à la surface d'une carte à puce insérée dans le lecteur, et dont au moins une borne, dite d'horloge, est destinée à délivrer audit circuit intégré un signal d'horloge,
. un micro-contrôleur destiné à échanger des données avec le circuit intégré et à gérer son alimentation en énergie et sa fréquence de fonctionnement,
. un module d'interface, inséré entre le connecteur et le micro-contrôleur, comportant un premier oscillateur dont la sortie est destinée à délivrer un premier signal d'horloge ayant une fréquence dite transitoire, module d'interface comportant en outre une unité de traitement permettant l'échange de données entre le micro-contrôleur et le circuit intégré, et
. un deuxième oscillateur dont la sortie est destinée à délivrer un deuxième signal d'horloge ayant une fréquence dite opérationnelle, supérieure à la fréquence transitoire,
le module d'interface comportant de plus un dispositif d'aiguillage destiné à acheminer vers la borne d'horloge du connecteur l'un ou l'autre des premier et deuxième signaux d'horloge en fonction de la valeur d'un signal de commande reçu depuis le micro-contrôleur.

Des lecteurs de carte à puce sont couramment utilisés dans des appareils destinés à recevoir et/ou à émettre des données, comme des radio-téléphones portables ou des décodeurs de signaux de télévision. Dans une telle application, la carte à puce contient des données nécessaires au fonctionnement de l'appareil, par exemple un code permettant d'identifier l'utilisateur qui a inséré la carte à puce dans le lecteur, et les fonctions que l'appareil est autorisé à remplir pour cet utilisateur. Lors de l'insertion d'une carte dans le lecteur, ces deux éléments interagissent selon deux régimes de fonctionnement successifs : dans une première phase, dite d'initialisation, le système n'est pas encore opérationnel. Le lecteur doit d'abord détecter la présence de la carte à puce, puis placer le circuit intégré présent à la surface de celle-ci dans ses conditions de fonctionnement nominales, c'est-à-dire, entre autres, lui fournir une tension d'alimentation ou encore initialiser des chemins de données pour que le circuit intégré puisse communiquer avec le lecteur. Dans une deuxième phase, dite permanente, le circuit intégré est alimenté en tension et reçoit un signal d'horloge à la fréquence opérationnelle, et les chemins de données sont prêts à véhiculer des informations entre le lecteur et le circuit intégré.

Au cours de la phase d'initialisation, le circuit intégré doit recevoir un signal d'horloge, dont la fréquence peut être différente de la fréquence opérationnelle. Il est préférable d'utiliser un signal ayant une fréquence, dite transitoire, inférieure à la fréquence opérationnelle, ce qui permet de réduire la consommation d'énergie du circuit intégré pendant la phase d'initialisation. Un tel choix est particulièrement avantageux dans des applications où la source d'énergie utilisée pour fournir au circuit intégré sa tension d'alimentation est une batterie, comme c'est le cas pour un radio-téléphone portable. Le module d'interface doit donc effectuer, en fin de phase d'initialisation, une commutation du signal qu'il fournit à la borne d'horloge du connecteur. Cette commutation est réalisée par le dispositif d'aiguillage qui, lorsqu'il en reçoit l'ordre matérialisé par une certaine valeur du signal de commande, remplace le premier signal d'horloge, qui constituait le signal d'horloge du circuit intégré pendant la phase d'initialisation, par le deuxième signal d'horloge destiné à constituer le signal d'horloge du circuit intégré pendant la phase permanente.

La commutation d'un signal d'horloge à un autre peut, en théorie, être opérée au moyen d'un simple multiplexage commandé par le signal de commande. Un tel multiplexage est asynchrone. Si les premier et deuxième signaux d'horloge sont respectivement à des états inactif et actif au moment où le signal de commande ordonne la commutation de l'un vers l'autre, ladite commutation va provoquer l'apparition d'un front actif intempestif dans le signal transmis à la borne d'horloge, qui n'aura été généré ni par le premier, ni par le deuxième signal d'horloge. Un tel front actif intempestif risque de nuire au fonctionnement du circuit intégré. Pour prévenir cet inconvénient, on peut prévoir la génération et la mémorisation au sein de bascules mémoire de deux signaux d'autorisation associés chacun à l'un des signaux d'horloge, le signal d'horloge sélectionné au moyen du signal de commande n'étant alors acheminé vers la borne d'horloge que si son signal d'autorisation associé est à l'état actif. La commutation d'un signal d'horloge à l'autre doit alors s'opérer en deux temps : dans un premier temps, la bascule mémoire dans laquelle est mémorisé le signal d'autorisation associé au premier signal d'horloge est invalidée, c'est-à-dire qu'elle reçoit un signal actif sur une entrée de remise à zéro, ce qui empêche l'acheminement du deuxième signal d'horloge vers la borne d'horloge, puis, dans un deuxième temps, la bascule mémoire dans laquelle est mémorisé le signal d'autorisation associé au deuxième signal d'horloge est validée, c'est-à-dire qu'elle reçoit un signal inactif sur son entrée de remise à zéro, ce qui permet l'acheminement du deuxième signal d'horloge vers la borne d'horloge. Si un tel mode de fonctionnement permet d'éviter que des fronts intempestifs ne surviennent dans le signal transmis à la borne d'horloge, il présente toutefois un autre inconvénient. Du fait que l'invalidation de la bascule qui est active avant la commutation et la validation de la bascule qui doit être active après la commutation se déroulent en deux temps, un front actif non-intempestif du deuxième signal d'horloge survenant immédiatement après que la sélection dudit signal ait été commandée par le signal de commande risque d'être ignoré au cours du processus de commutation, ce qui peut également nuire au fonctionnement du circuit intégré.

La présente invention a pour but de remédier aux inconvénients décrits ci-dessus, en proposant un lecteur de carte à puce dans lequel le circuit d'aiguillage est agencé de sorte que la commutation d'un signal d'horloge vers l'autre s'opère en un seul temps, sans pour autant que des fronts actifs intempestifs ne puissent survenir dans le signal transmis à la borne d'horloge.

En effet, un lecteur de carte à puce conforme au paragraphe introductif est caractérisé selon l'invention en ce que le dispositif d'aiguillage du module d'interface comporte un détecteur de phase muni d'une sortie destinée à délivrer un signal prenant un état actif lorsque les premier et deuxième signaux d'horloge présentent des fronts actifs quasi-simultanés, état actif qui conditionne la prise en compte du signal de commande par le dispositif d'aiguillage.

Le détecteur de phase assujettit toute commutation du dispositif d'aiguillage à une simultanéité des fronts actifs des premier et deuxième signaux d'horloge. Cette condition de simultanéité permet d'éviter que la commutation ne provoque l'apparition d'un front actif intempestif dans le signal transmis à la borne d'horloge. D'autre part, la commutation s'effectuant en un seul temps et quasi-instantanément, un front actif du deuxième signal d'horloge qui apparaîtrait peu après la commutation ne risquera pas d'être ignoré au cours du processus de commutation.

Le détecteur de phase peut être réalisé sous de multiples formes. Des détecteurs de phase sont couramment utilisés dans des boucles à verrouillage de phase au sein de syntoniseurs destinés à la réception de signaux radio-électriques. Ces détecteurs de phase, destinés à traiter des signaux analogiques, ont souvent des structures complexes. Dans un mode de réalisation particulièrement avantageux du fait de sa simplicité, un lecteur de carte à puce selon l'invention est caractérisé en ce que, le détecteur de phase inclus dans le module d'interface étant muni d'une première et d'une deuxième entrée respectivement destinées à recevoir des premier et deuxième signaux logiques, et d'une sortie destinée à délivrer un signal prenant un état actif lorsque lesdits premier et deuxième signaux présentent des fronts actifs quasi-simultanés, ledit détecteur de phase comporte une première et une deuxième bascule mémoire, chacune munie d'une sortie de données, d'une entrée de données placée à l'état actif, et d'une entrée d'horloge formant l'une des entrées du détecteur de phase, les sorties de données des première et deuxième bascules mémoire étant respectivement reliées, via des cellules à retard, aux première et deuxième entrées d'une porte ET logique deux entrées dont la sortie forme la sortie du détecteur de phase, lequel est muni de moyens pour placer la sortie de données de la première bascule mémoire à un état inactif lorsque la première entrée de la porte ET logique est à l'état actif tandis que la sortie de données de la deuxième bascule mémoire est à l'état inactif, et pour placer la sortie de données de la deuxième bascule mémoire à un état inactif lorsque la deuxième entrée de la porte ET logique est à l'état actif tandis que la sortie de données de la première bascule mémoire est à l'état inactif.

Le dispositif d'aiguillage peut, lui aussi, être réalisé sous différentes formes. Dans un mode de réalisation préféré de l'invention, le module d'interface du lecteur de carte à puce comporte un dispositif d'aiguillage de signaux, muni de deux entrées de signal destinées à recevoir des signaux logiques, d'une entrée de commande destinée à recevoir un signal de commande et d'une sortie destinée à délivrer l'un ou l'autre des signaux reçus sur les entrées de signal en fonction de la valeur du signal de commande, dispositif d'aiguillage caractérisé en ce qu'il comprend :
. un détecteur de phase tel que décrit ci-dessus, dont les entrées forment les entrées du dispositif,
. un multiplexeur, muni de deux entrées de données, chacune étant reliée à l'une des entrées du détecteur de phase, d'une sortie formant la sortie du dispositif, et d'une entrée de sélection, et
. une bascule mémoire dont l'entrée de données forme l'entrée de commande du dispositif, dont l'entrée d'horloge est reliée à la sortie du détecteur de phase, et dont la sortie de données est reliée à l'entrée de sélection du multiplexeur.

Cette structure simple du dispositif d'aiguillage permet de minimiser la surface de silicium nécessaire à l'implémentation du module d'interface sous forme intégrée, et par là-même de réduire les coûts de fabrication du lecteur de carte à puce.

Ainsi qu'exposé précédemment, un lecteur de carte à puce conforme à l'invention peut être avantageusement mis en oeuvre au sein d'un téléphone portable. L'invention concerne donc également un appareil de radio-téléphonie muni d'un lecteur de carte à puce, laquelle est destinée, lorsqu'elle est insérée dans le lecteur, à fournir à l'appareil des données nécessaires à son fonctionnement, caractérisé en ce que le lecteur de carte à puce est tel que décrit plus haut.

L'invention sera mieux comprise à l'aide de la description suivante, faite à titre d'exemple non-limitatif et en regard des dessins annexés, dans lesquels :
- la figure 1 est un schéma fonctionnel représentant un lecteur de carte à puce conforme à l'invention,
- la figure 2 est un schéma électrique représentant un dispositif d'aiguillage de signaux inclus dans un lecteur de carte à puce conforme à l'invention,
- la figure 3 est un ensemble de chronogrammes représentant l'évolution de signaux présents dans un tel dispositif d'aiguillage, et
- la figure 4 est une représentation schématique d'un téléphone portable muni d'un lecteur de carte à puce dans un mode de mise en oeuvre de l'invention.

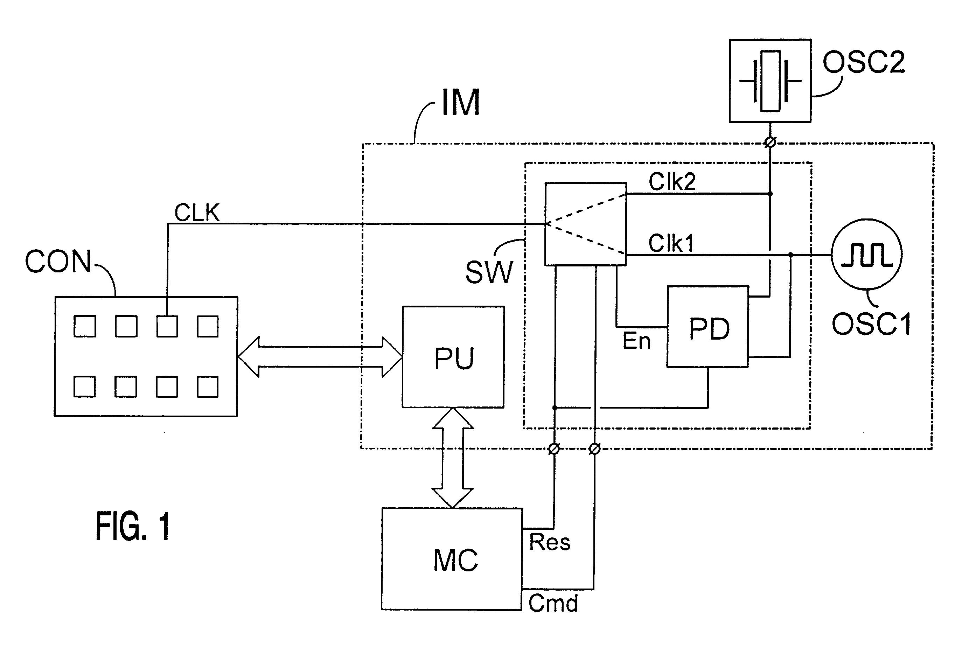

La figure 1 représente schématiquement un lecteur de carte à puce conforme à l'invention. Ce lecteur comprend :
. un connecteur CON destiné à être relié électriquement à un circuit intégré présent à la surface d'une carte à puce insérée dans le lecteur, et dont au moins une borne, dite d'horloge, est destinée à délivrer audit circuit intégré un signal d'horloge CLK,
. un micro-contrôleur MC destiné à échanger des données avec le circuit intégré et à gérer son alimentation en énergie et sa fréquence de fonctionnement,
. un module d'interface IM, inséré entre le connecteur CON et le micro-contrôleur MC, comportant un premier oscillateur OSC1, par exemple un oscillateur à quartz suivi ou non par un diviseur de fréquence, dont la sortie est destinée à délivrer un premier signal d'horloge Clk1 ayant une fréquence dite transitoire, module d'interface IM comportant en outre une unité de traitement PU permettant l'échange de données entre le micro-contrôleur MC et le circuit intégré, et
. un deuxième oscillateur OSC2 dont la sortie est destinée à délivrer un deuxième signal d'horloge Clk2 ayant une fréquence dite opérationnelle, supérieure à la fréquence transitoire.

Le module d'interface IM comporte de plus un dispositif d'aiguillage SW destiné à acheminer vers la borne d'horloge du connecteur CON l'un ou l'autre des premier et deuxième signaux d'horloge Clk1 et Clk2 en fonction de la valeur d'un signal de commande Cmd reçu depuis le micro-contrôleur MC.

Le dispositif d'aiguillage SW du module d'interface IM comporte un détecteur de phase PD muni d'une sortie destinée à délivrer un signal d'autorisation En prenant un état actif lorsque les premier et deuxième signaux d'horloge Clk1 et Clk2 présentent des fronts actifs quasi-simultanés, état actif qui conditionne la prise en compte du signal de commande Cmd par le dispositif d'aiguillage SW.

Le module d'interface IM est muni d'une entrée de ré-initialisation destinée à recevoir depuis le micro-contrôleur MC un signal de ré-initialisation Res dont la fonction est de replacer le dispositif d'aiguillage SW dans sa configuration initiale.

Le détecteur de phase PD assujettit toute commutation du dispositif d'aiguillage SW à une simultanéité des fronts actifs des premier et deuxième signaux d'horloge Clk1 et Clk2. Il sera démontré dans la suite de l'exposé que cette condition de simultanéité permet d'éviter que la commutation ne provoque l'apparition d'un front actif intempestif dans le signal CLK transmis à la borne d'horloge.

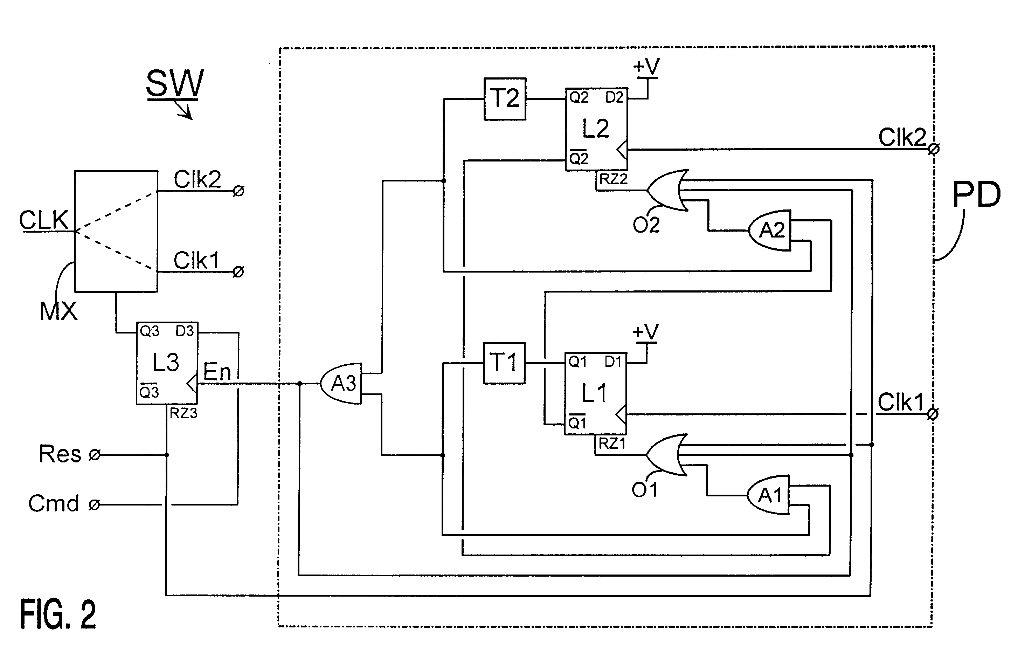

La figure 2 est un schéma électrique qui représente un mode de réalisation préféré du dispositif d'aiguillage SW et du détecteur de phase PD qu'il contient. Le détecteur de phase PD est muni d'une première et d'une deuxième entrée respectivement destinées à recevoir les premier et deuxième signaux d'horloge Clk1 et Clk2, et d'une sortie destinée à délivrer le signal d'autorisation En, qui doit prendre un état actif lorsque les premier et deuxième signaux d'horloge Clk1 et Clk2 présentent des fronts actifs, c'est-à-dire des fronts montants dans cet exemple, quasi-simultanés. Le détecteur de phase PD comporte une première et une deuxième bascule mémoire L1 et L2, chacune munie d'une sortie de données Q1 ou Q2, d'une entrée de données D1 ou D2 placée à l'état actif, c'est à dire dans cet exemple à un niveau logique 1 matérialisé par le potentiel +V d'une borne d'alimentation, et d'une entrée d'horloge formant l'une des entrées du détecteur de phase PD. Chaque bascule mémoire L1 ou L2 est de plus munie, dans le mode de réalisation décrit ici, d'une sortie inverseuse, Q1 ou Q2, et d'une entrée de remise à zéro RZ1 ou RZ2 qui, lorsqu'elle est placée à l'état actif, c'est-à-dire lorsqu'elle reçoit un niveau logique 1, impose un état inactif, c'est-à-dire un niveau logique 0 dans cet exemple, à la sortie de données, Q1 ou Q2, de ladite bascule mémoire L1 ou L2. Cette entrée de remise à zéro est reliée à une sortie d'une porte OU logique trois entrées, 01 ou 02. Une première entrée de cette porte OU logique est reliée à une entrée de ré-initialisation du dispositif d'aiguillage SW, qui est destinée à recevoir le signal de ré-initialisation Res. Une deuxième entrée de la porte OU logique, 01 ou 02, est reliée à la sortie du détecteur de phase PD. Une troisième entrée de la porte OU logique, 01 ou 02, est reliée à une sortie d'une porte ET logique deux entrées, A1 ou A2. Les sorties de données Q1 et Q2 des première et deuxième bascules mémoire, L1 et L2, sont respectivement reliées, via des cellules à retard T1 et T2, aux première et deuxième entrées d'une porte ET logique deux entrées A3 dont la sortie forme la sortie du détecteur de phase PD. Une première entrée de la porte ET logique, A1 ou A2, associée à l'une des première ou deuxième bascules mémoire, L1 ou L2, est reliée à la sortie de la cellule à retard T1 ou T2, associée à ladite bascule mémoire, L1 ou L2. Une deuxième entrée de la porte ET logique, A1 ou A2, associée à l'une des première ou deuxième bascules mémoire, L1 ou L2, est reliée à la sortie inverseuse, Q2 ou Q1, de l'autre bascule mémoire, L2 ou L1.

Le dispositif d'aiguillage SW comprend de plus :
. un multiplexeur MX, muni d'une entrée de sélection, de deux entrées de données, destinées à recevoir les premier et deuxième signaux d'horloge Clk1 et Clk2, et d'une sortie formant la sortie du dispositif d'aiguillage SW et destinée à délivrer à la borne d'horloge du connecteur le signal d'horloge CLK, et
. une troisième bascule mémoire L3 dont l'entrée de données D3 est destinée à recevoir le signal de commande Cmd, dont l'entrée d'horloge est reliée à la sortie du détecteur de phase PD, et dont la sortie de données Q3 est reliée à l'entrée de sélection du multiplexeur MX.

Le fonctionnement du dispositif d'aiguillage SW peut se décrire comme suit : dans un état initial, les sorties de données Q1, Q2 et Q3 des première, deuxième et troisième bascules mémoire L1, L2 et L3 sont à l'état inactif. On supposera dans un premier temps que le signal de ré-initialisation Res est à l'état inactif. Le détecteur de phase PD examine en permanence les premier et deuxième signaux d'horloge Clk1 et Clk2. Lorsque, par exemple, le premier signal d'horloge Clk1 présente un front actif, c'est-à-dire ici un front montant, la sortie de données Q1 de la première bascule mémoire L1 prend un état actif, la sortie inverseuse Q1 prenant simultanément un état inactif. L'entrée de remise à zéro RZ2 de la deuxième bascule mémoire L2 est alors forcée à l'état inactif via les portes logiques A2 et 02, et la sortie de données Q2 de la deuxième bascule mémoire L2 peut prendre un état actif si le deuxième signal d'horloge Clk2 présente un front actif. Si, au bout d'un délai T1 introduit par la première cellule à retard T1, un tel front actif ne s'est pas produit, la sortie inverseuse Q2 de la deuxième bascule mémoire L2 est toujours à l'état actif et les sorties des portes logiques A1 et 01 prennent l'état actif, replaçant ainsi la sortie de données Q1 de la bascule mémoire L1 à l'état inactif. Si, par contre, le deuxième signal d'horloge Clk2 présente un front actif avant l'expiration du délai T1 introduit par la première cellule à retard T1, la sortie inverseuse Q2 de la deuxième bascule mémoire L2 prend l'état inactif et empêche ainsi la remise à zéro de la première bascule mémoire L1. Au bout d'un délai T2 introduit par la deuxième cellule à retard T2, les deux entrées de la troisième porte ET logique A3 sont à l'état actif et le signal d'autorisation En prend l'état actif, signalant une quasi-simultanéité des fronts actifs des premier et deuxième signaux d'horloge.

La durée choisie pour les délais T1 et T2 introduits par les première et deuxième cellules à retard T1 et T2 déterminera la sévérité du critère de simultanéité. Plus cette durée sera brève, plus les fronts actifs des premier et deuxième signaux d'horloge Clk1 et Clk2 devront être rapprochés pour être considérés comme simultanés par le détecteur de phase PD.

Lorsque le signal de commande Cmd est à l'état inactif, c'est-à-dire pendant la phase d'initialisation, la sortie de données Q3 de la troisième bascule mémoire L3 est à l'état inactif et c'est le premier signal d'horloge Clk1 qui est sélectionné par le multiplexeur MX pour constituer le signal d'horloge CLK transmis à la borne d'horloge du connecteur. Lorsque le signal de commande Cmd prend l'état actif, signalant ainsi l'entrée en phase permanente, la sortie de données Q3 de la troisième bascule mémoire L3 reste à l'état inactif jusqu'à ce qu'une quasi-simultanéité des fronts actifs des premier et deuxième signaux d'horloge Clk1 et Clk2 soit détectée. Le signal d'autorisation En présente alors un front actif, qui permet à la sortie de données Q3 de la troisième bascule mémoire L3 de prendre l'état actif, ordonnant ainsi au multiplexeur MX de sélectionner le deuxième signal d'horloge Clk2 pour constituer le signal d'horloge CLK transmis à la borne d'horloge du connecteur. La sortie de données Q3 de la troisième bascule mémoire L3 reste à l'état actif jusqu'à ce que le signal de ré-initialisation Res prenne l'état actif. Par contre, dès que le signal d'autorisation En prend l'état actif, les première et deuxième bascules mémoire L1 et L2 sont remises à zéro via les portes OU logique 01 et 02, et sont prêtes à détecter une nouvelle quasi-simultanéité des fronts actifs des premier et deuxième signaux d'horloge Clk1 et Clk2.

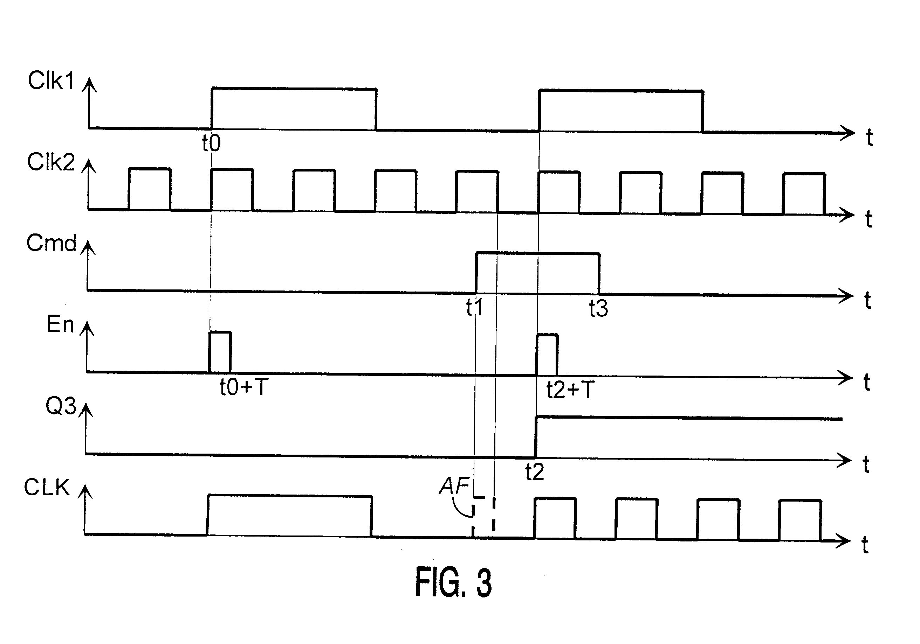

La figure 3 est un ensemble de chronogrammes qui illustre le fonctionnement décrit ci-dessus et permet de bien comprendre les avantages de l'invention. Le premier signal d'horloge Clk1 a une fréquence, dite transitoire, qui est dans cet exemple quatre fois plus petite que la fréquence, dite permanente, du deuxième signal d'horloge Clk2. Pendant la phase d'initialisation, le signal de commande Cmd est à l'état inactif, c'est-à-dire au niveau logique 0 dans cet exemple. La sortie de données Q3 est à l'état inactif et c'est le premier signal d'horloge Clk1 qui est sélectionné pour constituer le signal d'horloge CLK transmis à la borne d'horloge du connecteur. En t=t0, le détecteur de phase signale la simultanéité des fronts actifs, c'est-à-dire des fronts montants dans cet exemple, des premier et deuxième signaux d'horloge Clk1 et Clk2, en plaçant le signal d'autorisation En à l'état actif. Le front actif du signal d'autorisation En n'a aucune incidence sur la sélection opérée par le dispositif d'aiguillage, car le signal de commande Cmd est encore inactif. Le passage à l'état actif du signal d'autorisation En remet à zéro les bascules mémoires du détecteur de phase, ainsi qu'exposé précédemment. Le passage à l'état inactif des sorties de données desdites bascules mémoire ne provoque le retour à l'état inactif du signal d'autorisation En qu'en t=t0+T, avec T=τ+τ', où τ=τ1=τ2 dans cet exemple et τ' représente la somme des autres délais de propagation des signaux électriques dans le détecteur de phase. En t=t1, le signal de commande Cmd prend l'état actif, signalant ainsi l'entrée en phase permanente. Si le dispositif d'aiguillage était seulement constitué d'un multiplexeur dont l'entrée de sélection recevrait le signal de commande Cmd, le deuxième signal d'horloge Clk2 serait sélectionné dès l'instant t1 pour constituer le signal d'horloge CLK transmis à la borne d'horloge du connecteur. Un front actif intempestif AF, représenté en pointillés sur la figure apparaîtrait alors dans le signal CLK, front qui n'aurait été généré par aucun des premier et deuxième signaux d'horloge Clk1 et Clk2. Dans le dispositif d'aiguillage conforme à l'invention, la sortie de données Q3 de la troisième bascule mémoire L3 reste à l'état inactif jusqu'à ce qu'une quasi-simultanéité des fronts actifs des premier et deuxième signaux d'horloge Clk1 et Clk2 soit détectée, et c'est toujours le premier signal d'horloge Clk1 qui constitue le signal d'horloge CLK. En t=t2, le détecteur de phase signale la simultanéité des fronts actifs des premier et deuxième signaux d'horloge Clk1 et Clk2, en plaçant le signal d'autorisation En à l'état actif. Le front actif du signal d'autorisation En permet à la sortie de données Q3 de la troisième bascule mémoire L3 de prendre l'état actif, ordonnant ainsi au multiplexeur MX de sélectionner le deuxième signal d'horloge Clk2 pour constituer le signal d'horloge CLK transmis à la borne d'horloge du connecteur. La sortie de données Q3 de la troisième bascule mémoire L3 reste à l'état actif, mémorisé par ladite bascule, jusqu'à ce que le signal de ré-initialisation Res prenne l'état actif. En t=t2+T, le signal d'autorisation En revient à l'état inactif, et en t=t3, le signal de commande Cmd revient lui aussi à l'état inactif, sans aucune incidence sur l'état de la sortie de données Q3 de la troisième bascule mémoire.

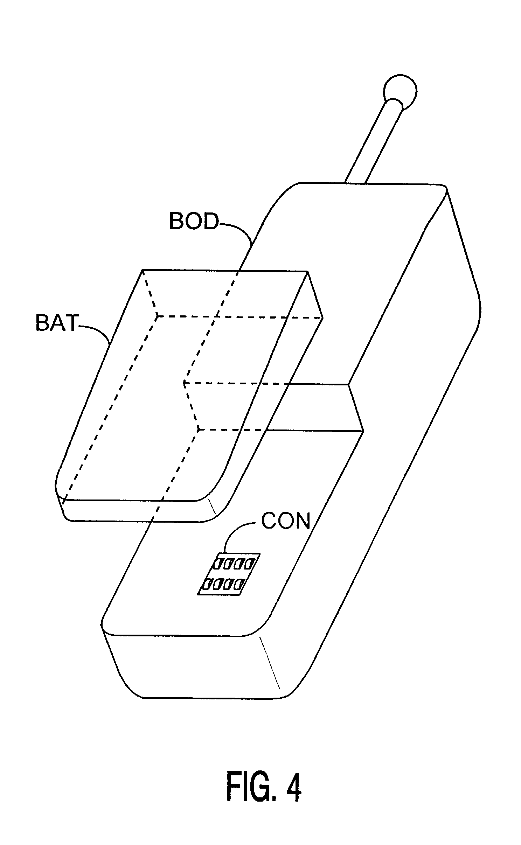

La figure 4 représente très schématiquement un appareil de radio-téléphonie muni d'un lecteur de carte à puce, laquelle est destinée, lorsqu'elle est insérée dans le lecteur, à fournir à l'appareil des données nécessaires à son fonctionnement. Cet appareil comporte un corps principal BOD, et une batterie détachable BAT, représentée sur ce schéma désolidarisée du corps BOD de manière à laisser apparaître un connecteur CON. Ce connecteur CON constitue la seule partie visible du lecteur de carte à puce dont est muni l'appareil. Le connecteur CON est destiné à être relié à un circuit intégré présent à la surface d'une carte à puce lorsque celle-ci est insérée dans l'appareil. Un lecteur de carte à puce selon l'invention permet de réduire la consommation d'énergie du circuit intégré présent à la surface de la carte à puce pendant la phase d'initialisation. Un tel choix est particulièrement avantageux dans des applications où la source d'énergie utilisée pour fournir au circuit intégré sa tension d'alimentation est une batterie, comme c'est le cas pour cet appareil de radio-téléphonie.

## Revendications

1. Lecteur de carte à puce, comprenant :
. un connecteur destiné à être relié électriquement à un circuit intégré présent à la surface d'une carte à puce insérée dans le lecteur, et dont au moins une borne, dite d'horloge, est destinée à délivrer audit circuit intégré un signal d'horloge,
. un micro-contrôleur destiné à échanger des données avec le circuit intégré et à gérer son alimentation en énergie et sa fréquence de fonctionnement,
. un module d'interface, inséré entre le connecteur et le micro-contrôleur, comportant un premier oscillateur dont la sortie est destinée à délivrer un premier signal d'horloge ayant une fréquence dite transitoire, module d'interface comportant en outre une unité de traitement permettant l'échange de données entre le micro-contrôleur et le circuit intégré, et
. un deuxième oscillateur dont la sortie est destinée à délivrer un deuxième signal d'horloge ayant une fréquence dite opérationnelle, supérieure à la fréquence transitoire,
le module d'interface comportant de plus un dispositif d'aiguillage destiné à acheminer vers la borne d'horloge du connecteur l'un ou l'autre des premier et deuxième signaux d'horloge en fonction de la valeur d'un signal de commande reçu depuis le micro-contrôleur,
lecteur de carte à puce caractérisé en ce que le dispositif d'aiguillage du module d'interface comporte un détecteur de phase muni d'une sortie destinée à délivrer un signal prenant un état actif lorsque les premier et deuxième signaux d'horloge présentent des fronts actifs quasi-simultanés, état actif qui conditionne la prise en compte du signal de commande par le dispositif d'aiguillage.

2. Détecteur de phase, muni d'une première et d'une deuxième entrées respectivement destinées à recevoir des premier et deuxième signaux logiques, et d'une sortie destinée à délivrer un signal prenant un état actif lorsque lesdits premier et deuxième signaux présentent des fronts actifs quasi-simultanés,
détecteur de phase caractérisé en ce qu'il comporte une première et une deuxième bascules mémoire, chacune munie d'une sortie de données, d'une entrée de données placée à l'état actif, et d'une entrée d'horloge formant l'une des entrées du détecteur de phase, les sorties de données des première et deuxième bascules mémoire étant respectivement reliées, via des cellules à retard, aux première et deuxième entrées d'une porte ET logique deux entrées dont la sortie forme la sortie du détecteur de phase, lequel est muni de moyens pour placer la sortie de données de la première bascule mémoire à un état inactif lorsque la première entrée de la porte ET logique est à l'état actif tandis que la sortie de données de la deuxième bascule mémoire est à l'état inactif, et pour placer la sortie de données de la deuxième bascule mémoire à un état inactif lorsque la deuxième entrée de la porte ET logique est à l'état actif tandis que la sortie de données de la première bascule mémoire est à l'état inactif.

3. Dispositif d'aiguillage de signaux, muni de deux entrées de signal destinées à recevoir des signaux logiques, d'une entrée de commande destinée à recevoir un signal de commande et d'une sortie destinée à délivrer l'un ou l'autre des signaux reçus sur les entrées de signal en fonction de la valeur du signal de commande,
caractérisé en ce qu'il comprend :
. un détecteur de phase conforme à la revendication 2, dont les entrées forment les entrées du dispositif,
. un multiplexeur, muni de deux entrées de données, chacune étant reliée à l'une des entrées du détecteur de phase, d'une sortie formant la sortie du dispositif, et d'une entrée de sélection, et
. une bascule mémoire dont l'entrée de données forme l'entrée de commande du dispositif, dont l'entrée d'horloge est reliée à la sortie du détecteur de phase, et dont la sortie de données est reliée à l'entrée de sélection du multiplexeur.

4. Appareil de radio-téléphonie muni d'un lecteur de carte à puce, laquelle est destinée, lorsqu'elle est insérée dans le lecteur, à fournir à l'appareil des données nécessaires à son fonctionnement, caractérisé en ce que le lecteur de carte à puce est conforme à la revendication 1.
